# EUROPÄISCHE PATENTSCHRIFT

(11) **EP 3 879 506 B1**
(45) Veröffentlichungstag und Bekanntmachung des Hinweises auf die Patenterteilung: **25.09.2024**
(21) Anmeldenummer: 21158372.9
(22) Anmeldetag: 22.02.2021
(51) Int. Cl.: G08B 13/12, A01K 3/00, E04H 17/18

(54) **ALARMVORRICHTUNG**
ALARM DEVICE
DISPOSITIF D'ALARME

(30) Priorität: 09.03.2020 DE 202020101284 U
(43) Veröffentlichungstag der Anmeldung: 15.09.2021
(73) Patentinhaber: Schake GmbH, 58089 Hagen (DE)
(72) Erfinder: Danehl, Julian, 58675 Hemer (DE)
(74) Vertreter: Patentanwälte Dörner & Kötter PartG mbB

(56) Entgegenhaltungen:
- WO-A1-2009/028966
- US-A1- 2007 296 577
- US-A1- 2016 042 618
- US-A1- 2017 019 980

## Beschreibung

Die Erfindung betrifft eine Alarmvorrichtung für Baustellen umfassend einen Absperrzaun, der aus einer Mehrzahl von Zaunelementen gebildet ist, die miteinander in Verbindung stehen, wobei die Zaunelemente und deren Verbindung, die von Bauzaunschellen aus Metall gebildet sind, elektrisch leitend sind.

Diebstähle auf Baustellen oder Industrieanlagen stellen ein zunehmendes Problem dar. Ursache hierfür ist, dass Baumaschinen, Bauwerkzeuge, Baumaterialien, Transport- und Hubfahrzeuge usw. immer hochwertiger werden und daher für Kriminelle von immer größer werdendem Interesse sind. Zwar sind insbesondere Baustellen schon aus Gründen des Schutzes gegen Unfälle mit Zäunen abgesperrt; diese sind jedoch nicht geeignet, Kriminelle an einem unbefugten Betreten des jeweils eingezäunten Bereichs zu hindern.

Ein Grund hierfür sind die zur Absperrung der Baustellen bzw. Industrieanlagen verwendeten Absperrzäune. Zur Erstellung solcher Absperrzäune kommen üblicherweise sogenannte Mobilzäune zur Anwendung. Es handelt sich dabei um mobile Einrichtungen, die sich insbesondere zur schnellen Anpassung an sich verändernde bzw. fortschreitende Baustellenbereiche eignen.

Die Mobilzäune sind von Zaunelementen gebildet, die mindestens zwei vertikale Standrohre sowie ein zwischen den Standrohren angeordnetes Flächenteil aufweisen. Das Flächenteil ist nach Art einer Gittermatte ausgebildet. Zur Erstellung der Absperrzäune wird eine Vielzahl von Zaunelementen nebeneinander aufgestellt.

Beim Aufstellen der Absperrzäune finden sogenannte Fußplatten Anwendung. Bei diesen handelt es sich um aus Kunststoff oder Beton hergestellte Platten, die mit Einstecktaschen versehen sind, in die an dem Zaun vorgesehene Füße bzw. Standrohre eingesteckt werden. In der Regel werden zwei benachbarte Zaunelemente an ihren einander zugewandten Enden mit ihren Füßen bzw. Standrohren in die gleiche Fußplatte eingesteckt.

Zur Erhöhung der Stabilität der Absperrzäune können die vertikalen Standrohre benachbarter Zaunelemente durch Schellen miteinander verbunden werden. Die Schellen sind aus zwei Halbschellen aufgebaut, welche aus Metallstreifen geformt sind. An den Halbschellen sind beidseitig jeweils Klemmbacken ausgebildet, die an die Standrohre angelegt werden und mit den Klemmbacken der gegenüber angeordneten Halbschelle Klemmen für die Rahmenrohre bilden. Die Halbschellen werden in der Mitte zwischen den Rahmenrohren miteinander verschraubt, wodurch die Standrohre eingeklemmt werden.

Als problematisch bei den Zäunen der vorgenannten Art erweist sich, dass die Standrohre der Zaunelemente nur lose in die Einstecktaschen der Fußplatten eingesteckt sind. Es besteht daher die Möglichkeit, unbefugt die Standrohre aus den Einstecktaschen herauszuziehen und so den Absperrzaun ohne großen Aufwand zu öffnen. Bei Verwendung der vorgenannten Schellen ist zusätzlich lediglich das Lösen der die beiden Halbschellen verbindenden Schraube erforderlich.

Da insbesondere große Baustellen oder Industrieanlagen unübersichtlich sind, bleiben unbefugte Zutritte auf das Gelände in der Regel unbemerkt, was insbesondere für Zutritte bei Dunkelheit gilt, da eine vollständige Ausleuchtung der Areale kaum möglich ist. Außerdem wird üblicherweise der eingezäunte Bereich selbst, nicht aber der den Bereich umgebende Absperrzaun beleuchtet.

Zur Vermeidung von Diebstählen bspw. auf Baustellen ist aus der US 2017/0019980 A1 ein transportierbarer, elektrifizierter Zaunbausatz zur Erstellung eines elektrischen Zauns bekannt, bei dem ein geschlossener Stromkreislauf mit Hilfe von Drähten gebildet ist. Elektrische Überwachungseinrichtungen für fest installierte Zaunanlagen sind bspw. aus der US 2016/0042618 A1 und US 2007/0296577 A1 bekannt. Aus der WO 2009/028966 A1 ist darüber hinaus ein System für die Überwachung eines elektrischen Zauns bekannt, welches detektierte Signale drahtlos an eine Überwachungseinheit übermittelt. Die bekannten Lösungen erfüllen zwar ihre Aufgabe; sie sind jedoch technisch aufwändig.

Vor diesem Hintergrund ist es Aufgabe der vorliegenden Erfindung, eine Alarmvorrichtung für Baustellen oder Industrieanlagen bereit zu stellen, die einerseits zuverlässig ist, andererseits nur einen sehr geringen technischen Aufwand erfordert. Gemäß der Erfindung wird diese Aufgabe mit den Merkmalen des Patent-anspruchs 1 gelöst.

Mit der Erfindung ist eine Alarmvorrichtung für Baustellen oder Industrieanlagen geschaffen, die einerseits zuverlässig ist, andererseits nur einen sehr geringen technischen Aufwand erfordert. Es ist nämlich lediglich erforderlich, an den Absperrzaun eine Spannungsquelle anzuschließen. Da die bekannten Bestandteile der Absperrzäune ohnehin mindestens teilweise aus Metall sind, sind sie elektrisch leitend, so dass über den gesamten Zaun eine elektrische Spannung geleitet werden kann. Das Alarmgerät stellt fest, ob eine Spannung anliegt. Stellt das Alarmgerät fest, dass der Kreislauf unterbrochen ist, löst es einen Alarm aus.

Vorteilhaft ist die Spannungsquelle eine Batterie. Diese Ausgestaltung bietet die Möglichkeit, die Alarmvorrichtung auch an Stellen zu verwenden, die nicht über eine Elektroinstallation verfügen.

In anderer Ausgestaltung ist die Spannungsquelle von einer Elektroinstallation gebildet. Diese Ausgestaltung findet Anwendung, wenn die Baustelle elektrifiziert ist. Sie ist insbesondere deshalb von Vorteil, weil die regelmäßige Überprüfung entfällt, ob die Spannungsquelle noch ausreichend geladen ist, wie das bei Betreiben der Alarmvorrichtung mit Batterien der Fall ist.

Bevorzugt ist die Spannungsquelle schaltbar. Die Schaltbarkeit ist nützlich, um beispielsweise Fehlalarme zu vermeiden, wenn aus Gründen des Betriebs der Baustelle der Absperrzaum geöffnet oder teilweise abgebaut werden soll, wodurch der Kreislauf unterbrochen werden kann. Durch die Schaltbarkeit sind Fehlalarme vermieden.

In Weiterbildung der Erfindung löst das Alarmgerät einen akustischen Alarm aus. Durch die akustische Alarmierung, bspw. durch eine Sirene, ist der Alarm von Jedermann wahrnehmbar und auch über große Entfernungen feststellbar.

In anderer Weiterbildung der Erfindung löst das Alarmgerät einen optischen Alarm aus. Ein optischer Alarm im Sinne der vorliegenden Erfindung kann durch eine Rundumleuchte, eine Blinkleuchte, eine Scheinwerfer- oder Flutlichtanlage usw. ausgelöst werden. Die Verwendung einer optischen Alarmierung hat insbesondere bei Dunkelheit Vorteile, weil das Licht weithin sichtbar ist.

In vorteilhafter Weiterbildung der Erfindung ist das Alarmgerät eine Sendeeinrichtung. Die Sendeeinrichtung ist geeignet, ein Signal auszusenden. Dieses Signal wird an einer ausgewählten Stelle von einer geeigneten Einrichtung empfangen, so dass die Unterbrechung des Stromkreises dort erkennbar ist. Die Verwendung einer Sendeeinrichtung bietet den Vorteil, dass eine Alarmierung auch an Einrichtungen oder Personen erfolgen kann, die sich weit entfernt von dem eingezäunten Bereich aufhalten.

Andere Weiterbildungen und Ausgestaltungen der Erfindung sind in den übrigen Unteransprüchen angegeben. Ausführungsbeispiele der Erfindung sind in der Zeichnung dargestellt und werden nachfolgend im Einzelnen beschrieben. Es zeigen:
- Figur 1: die schematische Darstellung eines Bauzauns mit Alarmvorrichtung;
- Figur 2: die abschnittsweise perspektivische Darstellung eines Bauzauns mit Alarmvorrichtung in einer anderen Ausgestaltung;
- Figur 3: die Ansicht des in Figur 2 dargestellten eines Bauzauns mit Alarmvorrichtung;
- Figur 4: die Draufsicht auf den in Figur 2 dargestellten Bauzaun mit Alarmvorrichtung.

Die Erfindung wird nachfolgend anhand einer Baustelleneinzäunung erläutert.

Sie ist jedoch nicht auf diese beschränkt, sondern ist auch für Industrieanlagen, Ausstellungsgelände usw. einsetzbar. Die als Ausführungsbeispiel gewählten Alarmvorrichtungen für Baustellen, umfassen einen Absperrzaun. Dieser ist nach Art eines Mobilzauns gebildet. Er besteht aus einer Mehrzahl von Zaunelementen 1, die miteinander in Verbindung stehen. Erfindungsgemäß ist die Verbindung von Bauzaunschellen 2 aus Metall gebildet. Die Zaunelemente 1 sind in Fußplatten 3 eingesteckt. Erkennbar ist der Absperrzaun mit einem Drehkreuz 4 und einem Schiebetor 5 versehen.

Die Zaunelemente 1 umfassen im Ausführungsbeispiel jeweils zwei vertikale Standrohre 11 sowie ein zwischen den Standrohren 11 angeordnetes Flächenteil 12. Das Flächenteil 12 weist an seinen horizontalen Enden jeweils ein Querrohr 13 auf.

Die Standrohre 11 haben in der Regel einen runden Querschnitt. Sie erstrecken sich über die gesamte Höhe des Flächenteils 12 und stehen an ihrem kopfseitigen Ende etwas über das obere Querrohr 13 hinaus. An ihrem bodenseitigen Ende ragen die Standrohre 11 deutlich über das untere Querrohr 13 hervor. Mit diesem Bereich sind die Standrohre 11 in die jeweiligen Einstecktaschen der Fußplatten 3 eingesteckt.

Das Flächenteil 12 ist nach Art einer Gittermatte ausgebildet. Es besteht im Wesentlichen aus vertikalen und horizontalen Drähten. Die vertikalen und horizontalen Drähte sind miteinander verschweißt, ebenso mit den Standrohren 11 und den Querrohren 13. Darüber hinaus sind auch die Querrohre 13 mit den Standrohren 11 verschweißt. Die Zaunelemente 1 sind aus Metall. Sie sind verzinkt, vorzugsweise feuerverzinkt.

Die Fußplatten 3 bestehen im Ausführungsbeispiel aus recyceltem Kunststoff. Alternativ können die Fußplatten 3 auch aus Beton hergestellt sein. Sie sind mit Einstecktaschen versehen, in die an den Zaunelementen 1 vorgesehene Standrohre 11 eingesteckt sind. Erkennbar sind überwiegend zwei benachbarte Zaunelemente an ihren einander zugewandten Enden mit ihren Standrohren 11 in die gleiche Fußplatte 3 eingesteckt

Das Drehkreuz 4 ist zwischen zwei Zaunelementen 1 positioniert. Es weist einen drehbaren Rotor 41 mit drei Flügeln auf. Die Flügel sind von einer Mehrzahl übereinander angeordneter, horizontal ausgerichteter Rohrabschnitte gebildet. Der Rotor 41 steht mit seinem Fuß auf dem Boden auf. Er ist an dem dem Boden abgewandten Ende an einem Dach 42 angebunden. Das Dach 42 ist getragen von zwei seitlichen Stützen 43, an die jeweils eine Partition 44 angebracht ist, welche jeweils eine annähernd teilkreisförmige Gestaltung haben. Zwischen der Achse des Rotors 41 und einer Stütze 43 ist eine Sperre 45 vorgesehen, die ebenfalls von horizontal ausgerichteten und übereinander angeordneten Rohrabschnitten gebildet ist.

Bei dem Schiebetor 5 handelt es sich um ein frei tragendes Tor, welches eine zwischen zwei Torpfosten 51 bestehende Zufahrt verschließt. Es besteht aus einem unteren Rahmenteil 52 und einem oberen Rahmenteil 53, die horizontal ausgerichtet sind. Zwischen den Rahmenteilen 52, 53 erstrecken sich vertikal ausgerichtete Streben 54. Das untere Rahmenteil ist deutlich länger als die Zufahrt breit ist. An seinem über den Bereich der vertikal ausgerichteten Streben 54 hinausragenden Ende ist eine Zugstrebe 55 befestigt, die mit ihrem anderen Ende an der äußersten Strebe 54 in Höhe des oberen Rahmenteils 53 angeschlagen ist. Es ist eine Laufschiene 56 vorgesehen, die neben der Zufahrt auf dem Boden aufsteht. Das Schiebetor 5 ist von Hand verschiebbar; es kann auch Motor betrieben sein.

An den Absperrzaun ist eine Spannungsquelle 6 angeschlossen. Im Ausführungsbeispiel handelt es sich bei der Spannungsquelle 6 um eine 12-Volt-Batterie. Erfindungsgemäß kann es auch eine wieder aufladbare Batterie sein. Auch kann die Spannungsquelle von einer oder mehreren Solarzellen gebildet sein. Auch eine Kombination aus Solarzellen und Batterien ist möglich. Der Anschluss an eine Elektroinstallation ist ebenfalls möglich. Die Spannungsquelle 6 ist schaltbar, um einen permanenten Betrieb zu vermeiden. Die Spannungsquelle 6 ist über Leitungen 7 an den Absperrzaun angeschlossen. Im Ausführungsbeispiel ist die Spannungsquelle an ein Zaunelement 1 angeschlossen; der Anschluss an eine oder mehrere Bauzaunschellen 2 ist ebenfalls möglich.

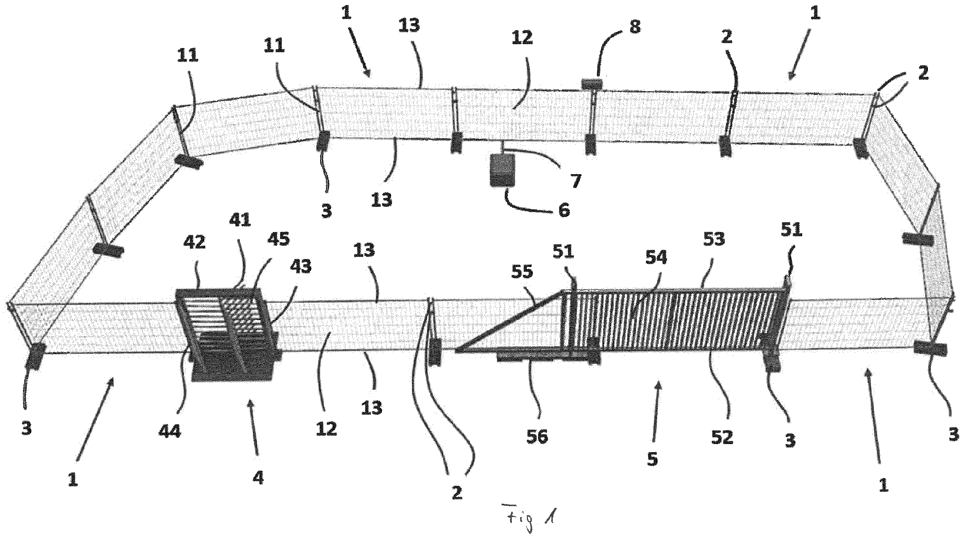

Darüber hinaus ist an dem Absperrzaun ein Alarmgerät 8 angeschlossen, welches von der Spannungsquelle 6 gespeist wird. Im Ausführungsbeispiel nach Figur 1 löst das Alarmgerät einen akustischen Alarm aus, der durch eine Sirene oder dergleichen erzeugt wird. In Abwandlung besteht auch die Möglichkeit, einen optischen Alarm auszulösen. Dies kann durch eine Rundumleuchte, eine Blinkleuchte, eine Scheinwerfer- oder Flutlichtanlage usw. erreicht werden. Es ist auch möglich, dass das Alarmgerät eine Sendeeinrichtung ist, die im Falle eines Alarms eine Nachricht aussendet, bspw. an die Zentrale einer Sicherheitsfirma, der Polizei, des Betreibers der Baustelle usw. Die Kombination der genannten Alarme ist ebenfalls möglich.

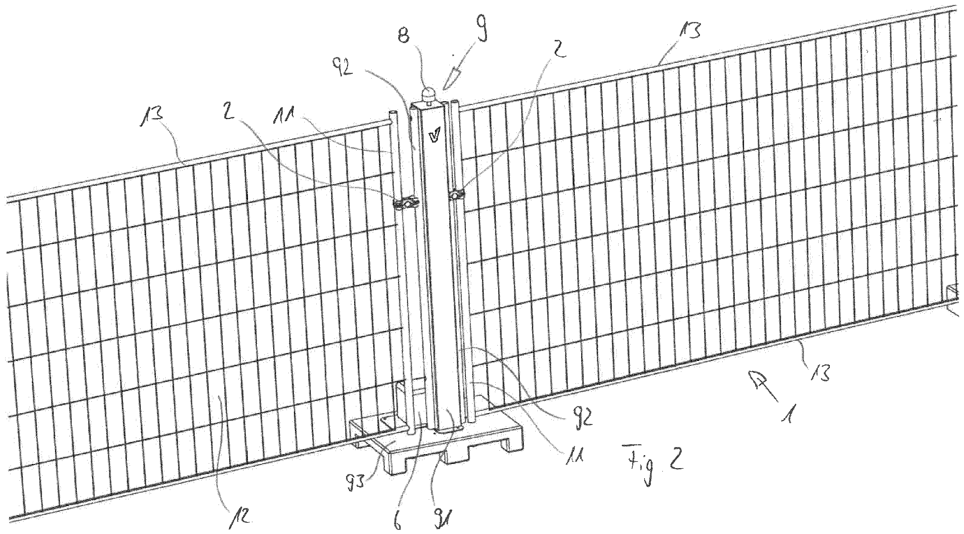

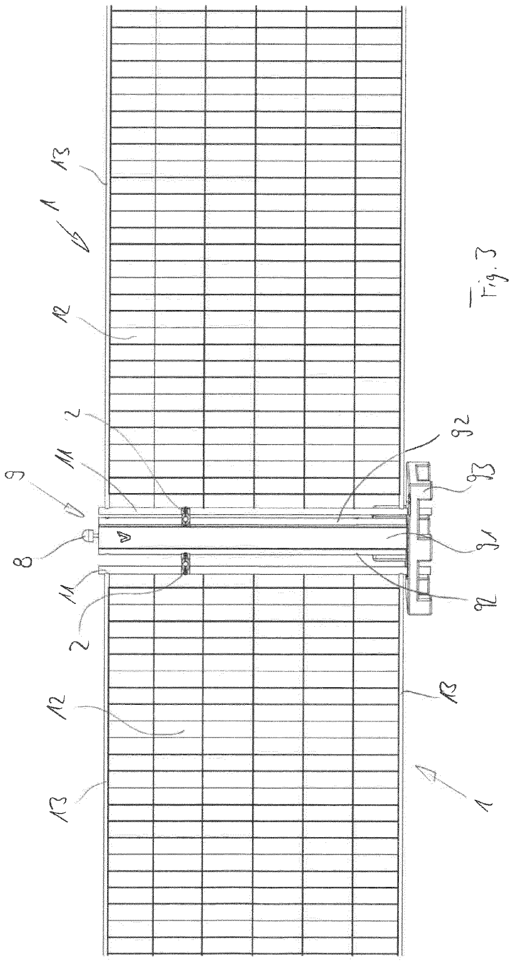

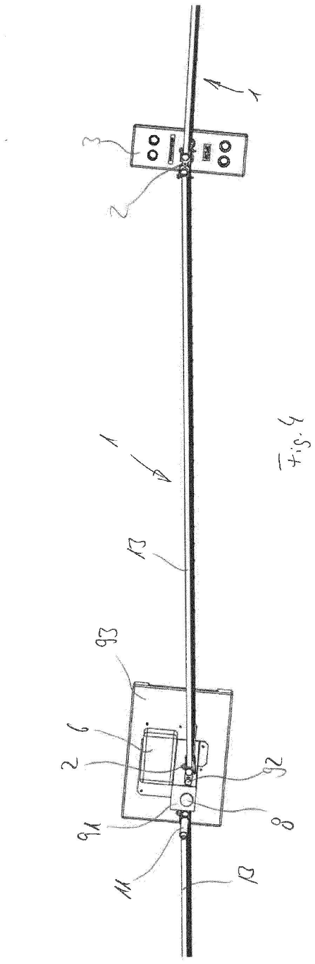

Im Ausführungsbeispiel nach den Figuren 2 bis 4 ist in dem Absperrzaun ein Alarmmodul 9 vorgesehen. Das Alarmmodul 9 besteht im Ausführungsbeispiel im Wesentlichen aus einer Säule 91, an der zwei Rohre 92 senkrecht ausgerichtete angeordnet sind, die eine zu den Standrohren 11 der Zaunelemente 1 vergleichbare Gestalt haben. Auf der Säule 91 ist im Ausführungsbeispiel das Alarmgerät 8 angeordnet, welches in diesem Ausführungsbeispiel als Rundumleuchte ausgebildet ist. Auch hier sind selbstverständlich andere Gestaltungen ebenso möglich, wie die Kombination verschiedener Alarme in dem Alarmmodul, solange der Schutzbereich des Anspruchs 1 nicht verlassen wird.

Die Säule 91 ist in eine Aufnahme in einer Bodenplatte 93 eingestellt. Die Bodenplatte 93 ist vergleichbar zu den Fußplatten 3 ausgebildet. Erkennbar hat die Bodenplatte 93 Einstecktaschen für die Standrohre 11 der angrenzenden Zaunelemente 1. Auf der Bodenplatte 93 ist die Spannungsquelle 6 angeordnet. Die zum Alarmmodul 9 benachbarten Zaunelemente 1 sind mit dem Alarmmodul 9 elektrisch leitend verbunden. Erfindungsgemäß ist diese Verbindung von den Bauzaunschellen 2 aus Metall gebildet, die die Standrohre 11 der Zaunelemente 1 mit den Rohren 92 des Alarmmoduls 9 verbinden. Es kommt folglich dieselbe Verbindungstechnik zum Einsatz. In dem Alarmmodul 9 ist auch die gesamte Schalt- und Regeltechnik und/oder Sende- und Empfangstechnik verbaut.

Die den Absperrzaun bildenden Elemente sind elektrisch leitend miteinander verbunden. Zunächst gilt das für die Zaunelemente 1 untereinander, welche erfindungsgemäß über die Bauzaunschellen 2 miteinander verbunden sind. Diese Art der Verbindung bietet den Vorteil, dass die Erfindung grundsätzlich mit handelsüblichen Teilen verwirklicht werden kann. Im einfachsten Fall, in dem die Baustelle ausschließlich mit einem Mobilzaun umzäunt wird, kommen allein die bekannten Zaunelemente 1 mit ihren Fußplatten 3 sowie die Bauzaunschellen 2 zum Einsatz. Zur Verwirklichung der Erfindung ist es daher möglich, einen bereits vorhandenen Mobilzaun durch Anschluss einer Spannungsquelle sowie eines Alarmgeräts zur erfindungsgemäßen Alarmvorrichtung zu erweitern.

Weil erfindungsgemäß die angelegte Spannung durch die Zaunelemente 1 und die Bauzaunschellen 2 fließt, bildet der Absperrzaun einen geschlossenen Stromkreis. Wird der Stromkreis bei angelegter Spannung unterbrochen, wird dies von dem Alarmgerät detektiert, woraufhin unmittelbar der Alarm ausgelöst wird. Folglich ist dem unbemerkten und unbefugten Zutritt der Baustelle durch Öffnen des Absperrzauns entgegen gewirkt.

Die elektrisch leitende Verbindung der den Absperrzaun bildenden Elemente gilt selbstverständlich auch bei Verwendung eines Drehkreuzes 4 und/oder eines Schiebetors 5. Auch diese Elemente sind in den Spannungskreislauf eingebunden, was aufgrund ihres üblicherweise aus Metall bestehenden Aufbaus keine Schwierigkeit darstellt. Insbesondere bei Verwendung eines Tores in dem Absperrzaun empfiehlt sich die Verwendung einer schaltbaren Spannungsquelle. Dadurch kann vermieden werden, dass im Falle eines berechtigten Öffnens des Tores ein Alarm ausgelöst wird.

Das erfindungsgemäße Alarmmodul 9 ist vollständig kompatibel zu bestehenden Bauzaunanlagen, da es dieselbe Verbindungstechnik nutzt, wie die Zaunanlage selbst auch. Da in dem Alarmmodul 9 die gesamte Schalt- und Regeltechnik und/oder Sende- und Empfangstechnik verbaut ist, lässt sich durch Einfügen eines einzigen Alarmmoduls jede geschlossene Bauzaunanlage zu einer erfindungsgemäße Alarmvorrichtung ausbauen.

## Patentansprüche

1. Alarmvorrichtung für Baustellen, umfassend einen Absperrzaun, der aus einer Mehrzahl von Zaunelementen (1) gebildet ist, die in Einstecktaschen von Fußplatten (3) eingesteckt sind und die miteinander in Verbindung stehen, wobei die Zaunelemente (1) und deren Verbindung (2), die von Bauzaunschellen aus Metall gebildet sind, elektrisch leitend sind, wobei eine Spannungsquelle (6) vorgesehen ist, die an mindestens ein Zaunelement (1) oder mindestens eine Verbindung (2) elektrisch leitend angeschlossen ist, und ein Alarmgerät (8) vorgesehen ist, **dadurch gekennzeichnet, dass** ein Alarmmodul (9) vorgesehen ist, das aus einer Säule (91) besteht, an der zwei Rohre (92) angeordnet sind, wobei die Säule (91) in eine Aufnahme in einer Bodenplatte (93) eingestellt ist, die vergleichbar zu den Fußplatten (3) ausgebildet ist und Einstecktaschen für Standrohre (11) der angrenzenden Zaunelemente (1) hat, wobei die Standrohre (11) der benachbarten Zaunelemente (1) mit den Rohren (92) des Alarmmoduls (9) elektrisch leitend verbunden sind, und in dem Alarmmodul (9) die gesamte Schalt- und Regeltechnik und/oder Sende- und Empfangstechnik verbaut ist.

2. Alarmvorrichtung nach Anspruch 1, **dadurch gekennzeichnet, dass** die Spannungsquelle (6) eine Batterie ist.

3. Alarmvorrichtung nach Anspruch 2, **dadurch gekennzeichnet, dass** die Batterie wieder aufladbar ist.

4. Alarmvorrichtung nach Anspruch 1, **dadurch gekennzeichnet, dass** die Spannungsquelle (6) von einer Elektroinstallation gebildet ist.

5. Alarmvorrichtung nach Anspruch 1, **dadurch gekennzeichnet, dass** die Spannungsquelle (6) von mindestens einer Solarzelle gebildet ist.

6. Alarmvorrichtung nach einem der vorgenannten Ansprüche, **dadurch gekennzeichnet, dass** die Spannungsquelle (6) schaltbar ist.

7. Alarmvorrichtung nach einem der vorgenannten Ansprüche, **dadurch gekennzeichnet, dass** das Alarmgerät (8) einen akustischen Alarm auslöst.

8. Alarmvorrichtung nach einem der vorgenannten Ansprüche, **dadurch gekennzeichnet, dass** das Alarmgerät (8) einen optischen Alarm auslöst.

9. Alarmvorrichtung nach einem der vorgenannten Ansprüche, **dadurch gekennzeichnet, dass** das Alarmgerät (8) eine Sendeeinrichtung ist.

## Claims

1. Alarm device for construction sites comprising a barrier fence, which is formed by a plurality of fence elements (1), which are inserted into insertion pockets of foot plates (3) and which are connected to one another, wherein the fence elements (1) and their connection (2), which are formed by construction fence clamps made of metal, are electrically conductive, wherein a voltage source (6) is provided, which is connected to at least one fence element (1) or at least one connection (2) in a electrically conductive manner, and an alarm unit (8) is provided, **characterised in that** an alarm module (9) is provided, which consists of a column (91), on which two pipes (92) are arranged, wherein the column (91) is placed in a receptacle in a base plate (93), which is designed in a manner comparable to the foot plates (3) and has insertion pockets for standpipes (11) of the adjacent fence elements (1), wherein the standpipes (11) of the adjacent fence elements (1) are connected to the pipes (92) of the alarm module (9) in an electrically conductive manner and the entire switching and control technology and/or transmission and reception technology is installed in the alarm module (9).

2. Alarm device according to claim 1, **characterised in that** the voltage source (6) is a battery.

3. Alarm device according to claim 2, **characterised in that** the battery is rechargeable.

4. Alarm device according to claim 1, **characterised in that** the voltage source (6) is formed by an electrical installation.

5. Alarm device according to claim 1, **characterised in that** the voltage source (6) is formed by at least one solar cell.

6. Alarm device according to one of the previous claims, **characterised in that** the voltage source (6) is switchable.

7. Alarm device according to one of the previous claims, **characterised in that** the alarm unit (8) triggers an acoustic alarm.

8. Alarm device according to one of the previous claims, **characterised in that** the alarm unit (8) triggers a visual alarm.

9. Alarm device according to one of the previous claims, **characterised in that** the alarm unit (8) is a transmission device.

## Revendications

1. Dispositif d'alarme pour chantiers, comprenant une clôture faisant barrage, composée d'une pluralité d'éléments (1) de clôture qui sont enfichés dans des poches à cet effet équipant des semelles (3), éléments qui sont reliés entre eux, sachant que les éléments (1) de clôture et leurs jonctions (2), qui sont formées de colliers en métal pour clôture de chantier, sont électroconducteurs, sachant qu'est prévue une source de tension (6) reliée de façon électroconductrice à au moins un élément (1) de clôture ou à au moins une jonction (2), et qu'un appareil d'alarme (8) est prévu, **caractérisé en ce qu'**un module d'alarme (9) est prévu, composé d'une colonne (91) contre laquelle deux tubes (92) sont disposés, sachant que la colonne (91) est introduite dans un logement dans une plaque de sol (93) configurée comparable aux semelles (3), et qui possède des poches d'enfichage pour les tubes verticaux (11) des éléments (1) de clôture limitrophes, sachant que les tubes verticaux (11) des éléments de clôture (1) voisins sont reliés de façon électroconductrice avec les tubes (92) du module d'alarme (9), et que dans le module d'alarme (9) est incorporée l'ensemble de la technique de commutation et de régulation, et/ou la technique d'émission et de réception.

2. Dispositif d'alarme selon la revendication 1, **caractérisé en ce que** la source de tension (6) est une batterie.

3. Dispositif d'alarme selon la revendication 2, **caractérisé en ce que** la batterie est rechargeable.

4. Dispositif d'alarme selon la revendication 1, **caractérisé en ce que** la source de tension (6) est formée par une installation électrique.

5. Dispositif d'alarme selon la revendication 1, caractérisé en ce la source de tension (6) est formée par au moins un panneau solaire.

6. Dispositif d'alarme selon l'une des revendications précédentes, **caractérisé en ce que** la source de tension (6) est commutable.

7. Dispositif d'alarme selon l'une des revendications précédentes, **caractérisé en ce que** l'appareil d'alarme (8) déclenche une alarme acoustique.

8. Dispositif d'alarme selon l'une des revendications précédentes, **caractérisé en ce que** l'appareil d'alarme (8) déclenche une alarme visuelle.

9. Dispositif d'alarme selon l'une des revendications précédentes, **caractérisé en ce que** l'appareil d'alarme (8) est un dispositif émetteur.
